# EUROPEAN PATENT SPECIFICATION

(11) **EP 2 732 866 B1**
(45) Date of publication and mention of the grant of the patent: **19.10.2016**
(21) Application number: 12815397.0
(22) Date of filing: 13.07.2012
(51) Int. Cl.: C08K 9/04, B01J 20/28, B01J 20/04, B01J 20/32, B01D 53/26, B01D 53/28, B01J 20/30, C01F 5/40

(54) **METHOF FOR PRODUCING MAGNESIUM SULFATE-BASED DESICCANT**
HERSTELLUNGSVERFAHREN FÜR EIN TROCKNUNGSMITTEL BASIERT AUF MAGNESIUMSULFAT
PROCÉDÉ DE PRÉPARATION D'UNE COMPOSITION DÉSHYDRATANTE DE SULFATE DE MAGNÉSIUM

(30) Priority: 15.07.2011 JP 2011157219
(43) Date of publication of application: 21.05.2014
(73) Proprietor: Tomita Pharmaceutical Co., Ltd., Naruto-shi, Tokushima 771-0360 (JP)
(72) Inventor: KAYAMA, Kazuhito, Naruto-shi Tokushima 771-0360 (JP); KONISHI, Koh, Naruto-shi Tokushima 771-0360 (JP); HITOMI, Masahiro, Naruto-shi Tokushima 771-0360 (JP); KOMETANI, Minoru, Naruto-shi Tokushima 771-0360 (JP); KONISHI, Masashi, Naruto-shi Tokushima 771-0360 (JP); KAWAMOTO, Ariumi, Naruto-shi Tokushima 771-0360 (JP)
(74) Representative: Müller-Boré & Partner Patentanwälte PartG mbB
(86) International application number: PCT/JP2012/067925
(87) International publication number: WO 2013/011941

(56) References cited:
- EP-A1- 2 058 372
- JP-A- 3 109 916
- JP-A- 2007 098 312
- JP-A- 2008 056 784
- US-A1- 2005 241 483
- US-A1- 2007 184 300
- DATABASE WPI Week 200534 Thomson Scientific, London, GB; AN 2005-326451 XP002729797, -& JP 2005 112746 A (SHIKOKU KASEI KOGYO KK) 28 April 2005 (2005-04-28)
- DATABASE WPI Week 199402 Thomson Scientific, London, GB; AN 1994-012468 XP002729798, -& JP H05 320415 A (UBE IND LTD) 3 December 1993 (1993-12-03)

## Description

The present invention relates to
a method for producing
a novel magnesium sulfate-based desiccant.

Desiccants such as silica gel, calcium chloride, calcium oxide or zeolite have been conventionally used in order to prevent the quality deterioration of goods due to oxidation and the like resulting from moisture absorption in the fields of food products, pharmaceuticals, electronic components, precision instruments and the like. These desiccants in the form of particles or powder are packaged in paper, nonwoven cloth and the like or enclosed in containers and the like which are then placed in packaging materials with goods.

Meanwhile there is a desiccant composition containing a certain desiccant (e.g. magnesium sulfate) admixed in a thermoplastic resin in order to provide high moisture absorbing and water retaining abilities and prevent leakage of liquid due to scattering, moisture absorbing or deliquescent properties. The composition is proposed to be molded into films, sheets and the like so as to be used as desiccants, packaging materials and the like (e.g. Patent Documents 1 and 2).

On the other hand, it is also proposed to add a fatty acid metal salt such as a metal soap in order to increase dispersibility of magnesium sulfate in a thermoplastic resin (Patent Document 3). More specifically, a desiccant containing thermoplastic resin composition is proposed which contains a desiccant having an equilibrium vapor pressure admixed in a thermoplastic resin selected from polyethylene, polypropylene, polyethylene terephthalate, polyvinyl chloride, ABS, polyamide, polystyrene, polyvinyl alcohol, polycarbonate, ethylene-methacrylate copolymer and polyacetal, wherein the desiccant is magnesium sulfate represented by the formula MgSO₄·nH₂O (0 ≤ n ≤ 3) and is admixed such that it is coated with a fatty acid metal salt so as to have a secondary particle diameter of 1 to 40 µm upon dispersion thereof in the thermoplastic resin, and wherein the composition allows increase/decrease of the equilibrium humidity by about RH 12% by increasing/decreasing by 0.01 the specific gravity of the thermoplastic resin which is polyethylene, polypropylene, polyethylene terephthalate or polyvinyl chloride and allows increase/decrease of the equilibrium humidity by about RH 3% by increasing/decreasing by 0.01 the specific gravity of the thermoplastic resin which is ABS, polyamide, polystyrene, polyvinyl alcohol, polycarbonate, ethylene-methacrylate copolymer or polyacetal.

Patent Document 1: Japanese Examined Patent Publication No. H7-53222
Patent Document 2: Japanese Examined Patent Publication No. H7-96092
Patent Document 3: Japanese Patent Publication No. 3979542

However, the desiccant according to Patent Document 3 still has room for improvement in terms of the following two points. First, the above desiccant may not be able to exhibit a desired moisture absorbing ability when it has insufficient dispersibility in the thermoplastic resin resulting from the hydrophobicity of the desiccant. Second, the desiccant has a high initial moisture absorption speed, thereby exhibiting a high moisture absorbing ability from immediately after production of the desiccant to the use thereof (during a desiccant storage period) or from the step of admixing the desiccant to the thermoplastic resin to the use thereof as a resin molded article (during a molded article storage period). When moisture is absorbed during these periods, the moisture absorbing ability of the desiccant containing thermoplastic resin composition upon the use thereof may be impaired and thus the storage stability needs to be improved.

US 2005/241483 A1 discloses an adsorbent-formed object and an adsorbent unit. US 2007/184300 A1 describes an oxygen absorbent molding and organic electroluminescent element.

Thus a main object of the present invention is to provide a magnesium sulfate-based desiccant which can exhibit a better hydrophobicity. Another object of the present invention is to provide a magnesium sulfate-based desiccant having excellent storage stability.

The present inventors carried out extensive studies in view of the problems of the prior art and as a result have found that the above problems can be solved by carrying out surface treatment of magnesium sulfate particles with a particular method, thereby completing the present invention.

Thus the present invention pertains to
a method for producing
a magnesium sulfate-based desiccant. according to claims 1 and 2:
1. A method for producing a magnesium sulfate-based desiccant comprising the step of grinding a mixed material containing 1) magnesium sulfate represented by the chemical formula MgS0₄.nH₂0 (0 < n < 3) and 2) a coating material that contains at least one of saturated monocarboxylic acids having 5 to 20 carbon atoms and salts thereof at or above a temperature at which the coating material
   exhibits plasticity, at or above the melting point of the coating material.
2. The method according to above 1, wherein the coating material contains at least one of stearic acid and calcium stearate.

According to the present invention, the particles of magnesium sulfate have the coating layer efficiently formed thereon by the method according to the present invention and can exhibit a specific contact angle, resulting in provision of a superior desiccant compared to the prior art products. Thus the magnesium sulfate-containing desiccant produced by the method according to the present invention can exhibit superior hydrophobicity compared to the prior art products and thus has increased conformity with the thermoplastic resin which is also hydrophobic, thereby being expected to have high dispersibility.

When the magnesium sulfate is anhydrous magnesium sulfate, the magnesium sulfate changes to magnesium sulfate trihydrate upon absorption of moisture and can be remained in the form of trihydrate for a certain amount of time, resulting in a prolonged period of time before reaching to the saturation of moisture absorption. Accordingly moisture absorption between immediately after the production and the use thereof can be suppressed, providing superior storage stability.

According to the production method of the present invention, grinding of the particles of magnesium sulfate and formation of the coating layer are performed simultaneously, thereby resulting in effective formation of the coating layer throughout the particle surfaces. Accordingly the production is more efficient than the prior art method where grinding and coating are carried out separately, and the obtained desiccant can exhibit superior properties (particularly hydrophobicity) compared to the prior art products as described above, providing industrial advantages.

The magnesium sulfate-based desiccant produced by the method of the present invention can be suitably added to a thermoplastic resin so as to serve as a desiccant. A resin composition containing the desiccant produced by the method of the present invention added to the thermoplastic resin exhibits an excellent moisture-proofing property and captures water generated from the thermoplastic resin and other substances (e.g. contents in a container), thereby preventing quality deterioration of goods to be stored.

Packaging materials for food products, electronic materials and the like are required to have, depending on applications thereof, heat resistance, chemical resistance, ultraviolet resistance and the like as well as a barrier property against various types of gas (oxygen gas, nitrogen gas, carbon dioxide gas, water vapor etc.). Resins having such a gas barrier property may be exemplified by polyethylene terephthalate (PET), polyvinylidene chloride (PVDC), ethylene-vinyl acetate copolymer (EVA), polyvinyl alcohol (PVA), low density polyethylene (LDPE), ethylene-vinyl alcohol copolymer (EVOH), copolymer of PVDC and methyl acrylate and the like, and the desiccant produced by the method of the present invention ensures that the resins liable to be affected by humidity on their gas barrier properties (e.g. EVOH, PVA etc.) can exhibit their original gas barrier properties.

Fig. 1 is a conceptual view of the contact angle at the contacting face of solid and liquid;
Fig. 2 is a view showing the results of scanning electron microscopy of (a) "No treatment" particles of anhydrous magnesium sulfate and (b) particles of calcium stearate, respectively;
Fig. 3 is a view showing the results of scanning electron microscopy of (c) a sample obtained in Example 1; (d) a sample obtained in Example 2; (e) a sample obtained in Example 3; and (f) a sample obtained in Example 4, respectively;
Fig. 4 is a view showing the results of scanning electron microscopy of (g) a sample obtained in Comparative Example 1; (h) a sample obtained in Comparative Example 2; (i) a sample obtained in Comparative Example 3; and (j) a sample obtained in Comparative Example 4, respectively;
Fig. 5 is a view showing the moisture absorbing property of samples obtained in Examples and Comparative Examples; and
Fig. 6 is a view (magnified view) showing the moisture absorbing property of samples obtained in Examples and Comparative Examples.

### 1. Magnesium sulfate-based desiccant

A magnesium sulfate-based desiccant which can be produced by the method of the present invention includes powder formed by coated particles that contain particles of magnesium sulfate represented by the chemical formula MgSO₄·nH₂O (0 ≤ n ≤ 3) the surface of which is coated with a coating layer and is characterized in that
(1) the coating layer contains a coating material that is at least one of carboxylic acids and salts thereof;
(2) the powder has an average particle diameter of 5 µm or less; and
(3) a contact angle of water relative to the face formed with the powder is 20 degrees or more.

The desiccant (particles) produced by the method of the present invention is mainly formed with, as described above, magnesium sulfate particles as a core and a coating layer formed thereon.

The magnesium sulfate is represented by the chemical formula MgSO₄·nH₂O (0 ≤ n ≤ 3) and may be either of anhydrous magnesium sulfate and magnesium sulfate hydrates. In the present invention, it is particularly desirable to used anhydrous magnesium sulfate (MgSO₄·nH₂O (0 ≤ n < 1; particularly 0 ≤ n ≤ 0.99) because it can exhibit the desired moisture absorbing ability and the like.

The coating layer of a general magnesium sulfate-based desiccant contains a coating material which is at least one of carboxylic acids and salts thereof. Carboxylic acids are not particularly limited as far as they are constituents of carboxylate salts used as surfactants and the like. Carboxylic acids may be saturated or unsaturated and may be any of monocarboxylic acids, dicarboxylic acids and the like.

Saturated monocarboxylic acids may be particularly exemplified. Specifically, saturated monocarboxylic acids having about 5 to 20 carbon atoms (e.g. caprylic acid, capric acid, lauric acid, myristic acid, palmitic acid and stearic acid) may be mentioned. The coating material in the present invention is at least one of saturated monocarboxylic acids having 5 to 20 carbon atoms and salts thereof. The salts of carboxylic acids which can be suitably used are metal salts including, for example, calcium salts, magnesium salts, sodium salts and the like. Thus the coating material which can be suitably used is at least one of, for example, saturated monocarboxylic acids having about 5 to 20 carbon atoms and calcium salts thereof, more preferably calcium stearate and the like.

The proportion of the coating layer in the coated particles may be appropriately selected according to the desired hydrophobicity and the like and may generally be such that the magnesium sulfate and the coating layer account for 85 to 99 parts by weight (preferably 90 to 97 parts by weight) and 1 to 15 parts by weight (preferably 3 to 10 parts by weight), respectively, relative to 100 parts by weight of the sum of the magnesium sulfate and the coating layer. The proportion of the coating layer as above allows further superior hydrophobicity and further ensures production of magnesium sulfate trihydrate upon absorption of moisture.

It is preferable that the powder has an average particle diameter of 5 µm or less, particularly 4 µm or less. The powder having such an average particle diameter allows more efficient exhibition of the moisture absorbing property and improvement in dispersibility to the thermoplastic resin.

The coated particles produced by the method of the present invention exhibit hydrophobicity and more specifically the contact angle of water relative to the face formed with the powder is 20 degrees or more, preferably 30 degrees or more, more preferably 80 degrees or more. Due to this hydrophobicity, it is expected that high dispersibility is exhibited in a thermoplastic resin. In the present invention, the method for measuring the contact angle may follow the method described in Examples hereinbelow.

The desiccant produced by the method of the present invention basically contains the coated particles as a constituent and may optionally contain other additives. For example, gas adsorption agents such as zeolite, molecular sieve, silica gel, activated carbon and magnesium oxide; infrared absorbing agents such as magnesium carbonate, magnesium oxide, synthetic hydrotalcite, magnesium silicate, silicon dioxide, aluminium oxide, magnesium hydroxide, aluminium hydroxide, calcium hydroxide, phosphate salts and silicate salts; ultraviolet absorbing agents such as titanium oxide, zinc oxide and cerium oxide may be contained at the extent that does not deteriorate the effect of the present invention.

The magnesium sulfate-based desiccant produced by the method of the present invention is suitably used particularly for adding to a thermoplastic resin.

The thermoplastic resin may be any well known or commercially available thermoplastic resin without particular limitation. Preferably and for example, at least one of polyethylene, polypropylene, polyethylene terephthalate, polyvinyl chloride, ABS, polyamide, polystyrene, polyvinyl alcohol, polycarbonate, ethylene-vinyl acetate copolymer (EVA), polyvinylidene chloride (PVDC), ethylene-methacrylate copolymer, ethylene-vinyl alcohol copolymer (EVOH), copolymer of PVDC and methyl acrylate and polyacetal can be selected.

The amount of the magnesium sulfate-based desiccant to be added to the thermoplastic resin may be appropriately selected according to the properties of the magnesium sulfate-based desiccant added or the application of the final product. The amount is generally and preferably 5 to 400 parts by weight relative to 100 parts by weight of the thermoplastic resin.

The magnesium sulfate-based desiccant may be added to the thermoplastic resin according to the well known addition method of desiccants without particular limitation. For example, a mixture containing the thermoplastic resin and the present desiccant is mixed in a well known apparatus such as a ribbon mixer, a tumbler mixer, a Henschel mixer or a mixing roll and then kneaded at or above the melting point of the thermoplastic resin.

The resin composition
can be readily molded into any shapes according to the application such as film-shaped, sheet-shaped, plate-shaped, bag-shaped, pellet-shaped or container-shaped. The thus obtained molded article is the desiccant *per se* and can be used as various products such as packaging materials, containers and lids. These products can be widely applied to the fields of, for example, food products, pharmaceuticals, electronic components or precision instruments and to the applications as gas barrier materials and the like.

### 2. Method for producing magnesium sulfate-based desiccant

A magnesium sulfate-based desiccant can be obtained by a method including the step of grinding a mixed material containing 1) magnesium sulfate represented by the chemical formula MgSO₄·nH₂O (0 ≤ n ≤ 3) and 2) a coating material that contains at least one of saturated monocarboxylic acids having 5 to 20 carbon atoms and salts thereof at or above a temperature at which the coating material exhibits plasticity ( at or above the melting point of the coating material).

The prior art method includes coating magnesium sulfate powder (particles) having been adjusted to a certain particle size with a fatty acid metal salt by a manner such as dry mixing or wet coating. It is extremely difficult to obtain a uniform coating layer by dry mixing because the particle diameter of the fatty acid metal salt particles relative to the particle diameter of the magnesium sulfate particles needs to be preliminarily adjusted and the uniformity of the coating layer is significantly affected by the particle size distribution of the fatty acid metal salt particles. In wet coating, the fatty acid metal salt is liquidized by dissolution or suspension and used for spray-dry coating of magnesium sulfate particles while the magnesium sulfate particles are flown in an agitation granulator, a fluidized bed granulator and the like. The wet coating requires the use of an organic solvent upon preparation of liquid containing the fatty acid metal salt. Thus the wet coating is not economical because of the complexity of the coating step resulting in increased cost. Further the magnesium sulfate particles (powder) obtained by the above prior art methods aggregate during the coating step to produce particles having a high particle diameter, and thus are inappropriate to be used as a desiccant and the like.

In contrast, the production method of the present invention includes the step of grinding a mixed material of magnesium sulfate particles and a carboxylic acid or a salt thereof (coating material) at a certain temperature. Namely, at least the magnesium sulfate particles are ground in the presence of the carboxylic acid or a salt thereof at or above a temperature at which the coating material exhibits plasticity ( at or above the melting point of the coating material) (hereinafter also referred to as "a plasticity exhibiting temperature"), and thus fine particles are obtained by grinding and at the same time some or all coating material is deformed or melted which then adheres to the surface of the magnesium sulfate fine particles. During these procedures, the formation of the coating material is ensured almost all over surface of the magnesium sulfate particles. As a result, it is believed that an increased hydrophobicity can be obtained compared to the prior art techniques. In other words, it is believed that the method of the present invention allows economical production of a further superior desiccant composition by producing fine particles of magnesium sulfate simultaneously with the formation of a uniform coating layer.

When a plurality of coating materials is used in the present invention, the temperature at which grinding is carried out is preferably at or above the plasticity exhibiting temperature of the coating material having the highest plasticity exhibiting temperature and more preferably at or above the melting temperature of the coating material having the highest melting temperature.

The grinding method may be any well known grinding method as far as it allows grinding of the magnesium sulfate particles to reduce the particle diameter thereof without particular limitation. A grinding method may be appropriately employed which is carried out with a well known device such as a ball mill, a jet mill or a pulverizer (impact grinder).

The extent of grinding in the method of the present invention may be appropriately adjusted according to the desired average particle diameter and the like. The grinding is preferably carried out such that the average particle diameter (D50) after grinding for example is 50% or less, particularly 30% or less and yet 25% or less of the average particle diameter prior to grinding in order to efficiently form the coating layer, to obtain preferable dispersion in a thermoplastic resin and the like. When the average particle diameter prior to grinding is 12 µm for example, grinding is desirably adjusted so as to obtain the average particle diameter after grinding of 6 µm or less. It is further preferable to carry out grinding so as to obtain the particle sizes after grinding corresponding to the average particle diameter (i.e. the median diameter (D50)) of 5 µm or less, the particle diameter corresponding to 90% of the cumulative undersize fraction (D90) of 10 µm or less and the maximum particle diameter (Dtop) of 15 µm or less.

The above grinding may be carried out by preparing a mixed material containing the starting materials, i.e. magnesium sulfate powder and the coating material at predetermined proportions and subjecting the mixed material to grinding.

In the method of the present invention, the starting materials, i.e. magnesium sulfate and the coating material, and amounts thereof may be the same as those explained in the above section 1.

### Examples

The features of the present invention are more specifically described by way of Examples and Comparative Examples hereinbelow. However the scope of the present invention is not limited to Examples.

In Examples and Comparative Examples, physical properties were measured according to the following methods.

### (1) Average particle diameter

A sample was stirred by ultrasonication (frequency: 400 Hz) prior to dispersion in acetone and then the measurement was carried out in acetone by laser diffractometry. The measurement was carried out on "MICROTRAC HRA Model No. 9320-X100" by Honeywell. Based on the obtained particle size distribution, a particle diameter corresponding to 10% of the cumulative undersize fraction (D10) , a median diameter of the cumulative undersize fraction (D50), a particle diameter corresponding to 90% of the cumulative undersize fraction (D90) and a maximum diameter (Dtop) were determined and the median diameter was taken as the average particle diameter.

### (2) Observation of particles

The particles were observed under a scanning electron microscope ("JSM-5500LV" by JEOL Ltd., 15 kv, 5000-fold magnification).

### (3) Specific surface area

A sample (about 50 mg) was subjected to pre-treatment (under reduced pressure, 105°C, 1 hour) and measured for specific surface area according to the nitrogen gas adsorption method. The measurement was carried out on the "high-speed specific surface area and pore size distribution analyzer: NOVA 4000e" by Yuasa-Ionics Co., Ltd.

### (4) Contact angle

### <Regulation of sample surface>

A sample was filled into a quartz glass cell (container) having inner dimensions of W 55 mm x D 24 mm x H 18.5 mm and the surface was regulated to be flat.

### <Measurement device>

The "Drop Master 701" by Kyowa Interface Science Co., Ltd. was used.

### <Contact angle measurement by sessile drop method>

A 1-mL glass syringe was attached with a stainless needle of 22G (inner diameter 0.4 mm) and was filled with distilled water. A piston of the glass syringe was gradually pressed in order to form a water droplet of about 4 µL at the tip of the stainless needle.

A sample surface was gradually moved towards the water droplet and contacted thereto at the same time as the initiation of recording with a CCD camera, thereby attaching the water droplet on the sample surface.

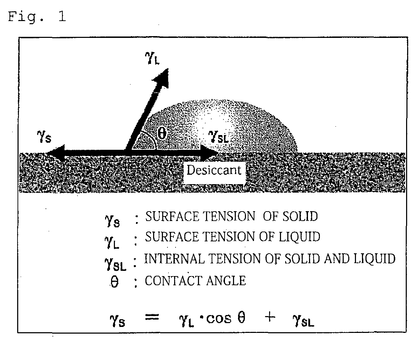

Based on the recorded images, the contour of the water droplet on the sample surface was approximated to be a part of a circle. According to the calculating formula shown in Fig. 1, the contact angle (θ) was analyzed and calculated which corresponds to the angle formed by the sample surface and the tangent of the water droplet at the contact point.

### (5) Saturation of moisture absorption and moisture absorption speed

A sample (5 g) was placed in an Environment Chamber ("KCL-2000" by EYELA Corporation, temperature: 20°C and humidity: 90% RH) and moisture absorption (the weight increase in grams per gram of the sample) was measured after 0, 0.5, 1, 1.5, 2, 3, 4, 6, 8, 10, 22, 34, 48, 121 and 144 hours. The theoretical value of saturation of moisture absorption for anhydrous magnesium sulfate is 1.05 g/g.

### Example 1

Mixed powder containing 99.0 wt% of anhydrous magnesium sulfate labeled with "No treatment" in Table 1 (average particle diameter: 12.5 µm, BET specific surface area: 3.7 m²/g) and 1.0 wt% of calcium stearate (average particle diameter: 5.72 µm) was subjected to the pulverizing treatment by a dry method on an impact grinder (rotation speed of the grinder: 6000 to 7000 rpm; rotation speed of a classification apparatus: 3000 to 4000 rpm). The obtained ground material was measured for the particle diameters, i.e. average particle diameter (D50), D10, D90 and maximum particle diameter (Dtop) as well as for the contact angle and the saturation of moisture absorption. The results are shown in Table 1. The anhydrous magnesium sulfate labeled with "No treatment" did not allow measurement of the contact angle because it absorbed water immediately after it contacted to the water droplet and did not allow retention of the water droplet on the sample surface in the contact angle measurement, while the sample obtained in Example 1 showed the contact angle of 32.4°, apparently suggesting the hydrophobicity thereof.

**Table 1**

| | | No treatment | Example 1 | Example 2 | Example 3 | Example 4 |
|---|---|---|---|---|---|---|
| Anhydrous Mg sulfate | | 100.0 | 99.0 | 97.0 | 95.0 | 90.0 |
| Ca stearate | | 0.0 | 1.0 | 3.0 | 5.0 | 10.0 |
| Particle diameter (µm) | D10 | 5.18 | 1.43 | 1.63 | 1.65 | 1.72 |
| | D50 | 12.5 | 2.98 | 3.01 | 2.84 | 3.00 |
| | D90 | 20.1 | 5.77 | 5.50 | 5.07 | 5.72 |
| | Dtop | 44.0 | 11.0 | 11.0 | 9.25 | 11.0 |
| Contact angle (°) | | Not measurable | 32.4 | 84.4 | 113.2 | 122.1 |
| Saturation of moisture absorption (g/g) | | 1.02 | 1.02 | 1. 02 | 1.02 | 1.06 |

### Example 2

The grinding process was performed in the same manner as Example 1 except that 97.0 wt% of anhydrous magnesium sulfate and 3.0 wt% of calcium stearate accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 1. The sample obtained in Example 2 showed the contact angle of 84.4°, apparently demonstrating the hydrophobicity thereof.

### Example 3

The grinding process was performed in the same manner as Example 1 except that 95.0 wt% of anhydrous magnesium sulfate and 5.0 wt% of calcium stearate accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 1. The sample obtained in Example 3 showed the contact angle of 113.2°, apparently demonstrating the hydrophobicity thereof.

### Example 4

The grinding process was performed in the same manner as Example 1 except that 90.0 wt% of anhydrous magnesium sulfate and 10.0 wt% of calcium stearate accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 1. The sample obtained in Example 4 showed the contact angle of 122.1°, apparently demonstrating the hydrophobicity thereof.

### Comparative Example 1

The anhydrous magnesium sulfate labeled with "No treatment" in Table 1 (average particle diameter: 12.5 µm, BET specific surface area : 3.7 m²/g) was subj ected to the grinding process by a dry method on an impact grinder (rotation speed of the grinder: 6000 to 7000 rpm; rotation speed of a classification apparatus: 3000 to 4000 rpm). The obtained ground anhydrous magnesium sulfate (99.0 wt%) was then mixed (without grinding) with 1.0 wt% of calcium stearate (average particle diameter: 5.72 µm), accounting for 100 wt% in total, to obtain a mixture. The mixture was then measured for the particle diameters, i.e. average particle diameter (D50), D10, D90 and maximum particle diameter (Dtop) as well as for the contact angle and the saturation of moisture absorption. The results are shown in Table 2. The sample obtained in Comparative Example 1, as the anhydrous magnesium sulfate labeled with "No treatment", did not allow measurement of the contact angle because it absorbed water immediately after it contacted to the water droplet and did not allow retention of the water droplet on the sample surface in the contact angle measurement.

**Table 2**

| | | Ca stearate | Comp. Ex. 1 | Comp. Ex. 2 | Comp. Ex. 3 | Comp. Ex. 4 |
|---|---|---|---|---|---|---|
| Anhydrous Mg sulfate | | 0.0 | 99.0 | 97.0 | 95.0 | 90.0 |
| Ca stearate | | 100.0 | 1.0 | 3.0 | 5.0 | 10.0 |
| Particle diameter (µm) | D10 | 2.55 | 1.70 | 1.69 | 1.77 | 1.84 |
| | D50 | 5.72 | 3.39 | 3.36 | 3.36 | 3.43 |
| | D90 | 102 | 6.22 | 6.27 | 6.18 | 6.20 |
| | Dtop | 296 | 11.0 | 13.1 | 11.0 | 13.1 |
| Contact angle (°) | | - | Not measurable | Not measurable | Not measurable | Not measurable |
| Saturation of moisture absorption (g/g) | | 0.000 | - | - | - | 1.02 |

### Comparative Example 2

A mixture was prepared in the same manner as Comparative Example 1 except that 97.0 wt% of ground anhydrous magnesium sulfate and 3.0 wt% of calcium stearate accounted for the total of 100 wt%. The obtained mixture was measured for the particle diameters, i.e. average particle diameter (D50), D10, D90 and maximum particle diameter (Dtop) as well as for the contact angle and the saturation of moisture absorption. The results are shown in Table 2. The sample obtained in Comparative Example 2, as the anhydrous magnesium sulfate labeled with "No treatment", did not allow measurement of the contact angle because it absorbed water immediately after it contacted to the water droplet and did not allow retention of the water droplet on the sample surface in the contact angle measurement.

### Comparative Example 3

A mixture was prepared in the same manner as Comparative Example 1 except that 95.0 wt% of ground anhydrous magnesium sulfate and 5.0 wt% of calcium stearate accounted for the total of 100 wt%. The obtained mixture was measured for the particle diameters, i.e. average particle diameter (D50), D10, D90 and maximum particle diameter (Dtop) as well as for the contact angle and the saturation of moisture absorption. The results are shown in Table 2. The sample obtained in Comparative Example 3, as the anhydrous magnesium sulfate labeled with "No treatment", did not allow measurement of the contact angle because it absorbed water immediately after it contacted to the water droplet and did not allow retention of the water droplet on the sample surface in the contact angle measurement.

### Comparative Example 4

A mixture was prepared in the same manner as Comparative Example 1 except that 90.0 wt% of ground anhydrous magnesium sulfate and 10.0 wt% of calcium stearate accounted for the total of 100 wt%. The obtained mixture was measured for the particle diameters , i. e. average particle diameter (D50), D10, D90 and maximum particle diameter (Dtop) as well as for the contact angle and the saturation of moisture absorption. The results are shown in Table 2. The sample obtained in Comparative Example 4, as the anhydrous magnesium sulfate labeled with "No treatment", did not allow measurement of the contact angle because it absorbed water immediately after it contacted to the water droplet and did not allow retention of the water droplet on the sample surface in the contact angle measurement.

### Test Example 1

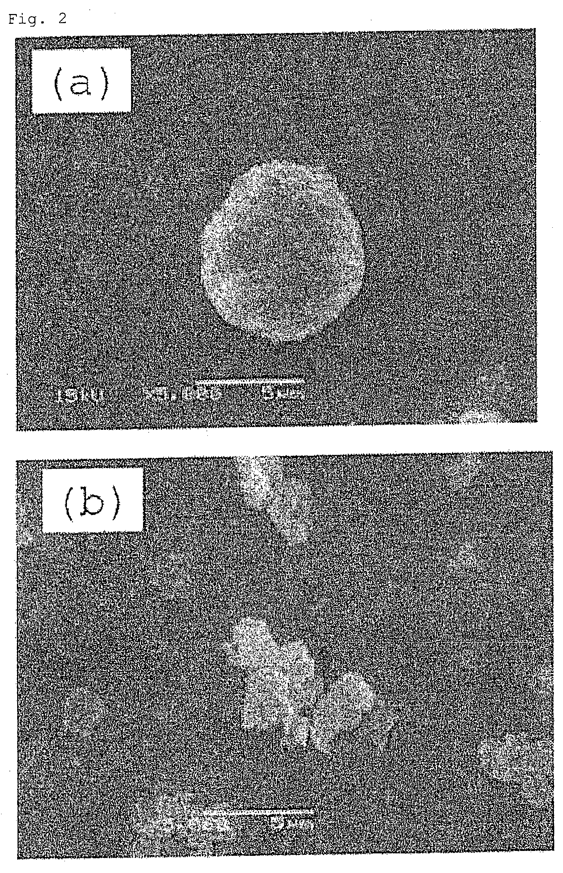

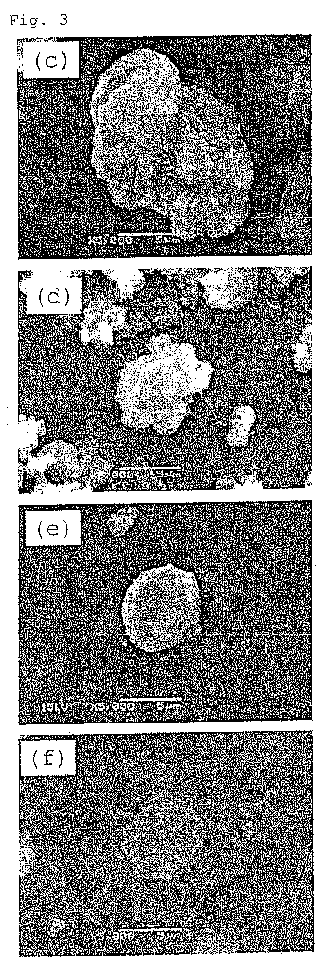

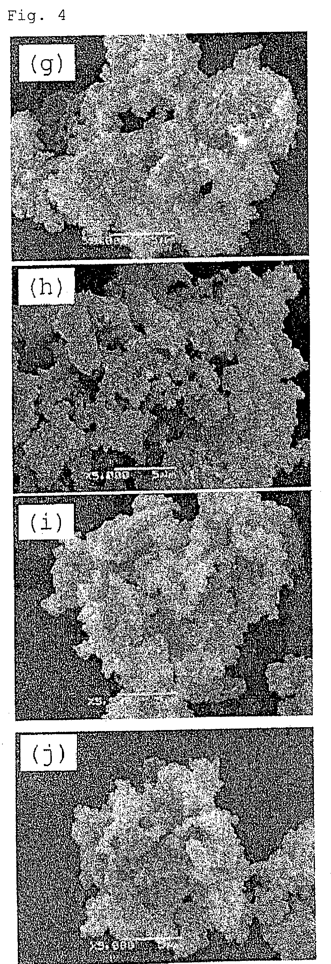

The desiccant compositions obtained in Examples and Comparative Examples as well as the anhydrous magnesium sulfate labeled with "No treatment" and calcium stearate were observed for particle appearance under a scanning electron microscope. The results are shown in Figs. 2 to 4. In Figs. 2 to 4 , the "No treatment" anhydrous magnesium sulfate particles are shown in Fig. 2(a); calcium stearate particles are in Fig. 2(b); the sample obtained in Example 1 is in Fig. 3(c); the sample obtained in Example 2 is in Fig. 3(d); the sample obtained in Example 3 is in Fig. 3(e); the sample obtained in Example 4 is in Fig. 3 (f) ; the sample obtained in Comparative Example 1 is in Fig. 4(g); the sample obtained in Comparative Example 2 is in Fig. 4(h); the sample obtained in Comparative Example 3 is in Fig. 4(i); and the sample obtained in Comparative Example 4 is in Fig. 4(j). As is apparent from these results, the samples of Comparative Examples are particles with largely irregular surfaces and have rough surfaces. In contrast, it is apparent that the samples of Examples have relatively smooth particle surfaces. Thus it indicates that all surfaces of the magnesium sulfate particles according to the desiccant produced by the method of the present invention are almost uniformly coated by the coating layer. It is believed that some or all calcium stearate was deformed or melted to spread the coating layer of calcium stearate on the particle surfaces, resulting in almost uniform coating of the whole magnesium sulfate particle surfaces by the coating layer.

### Test Example 2

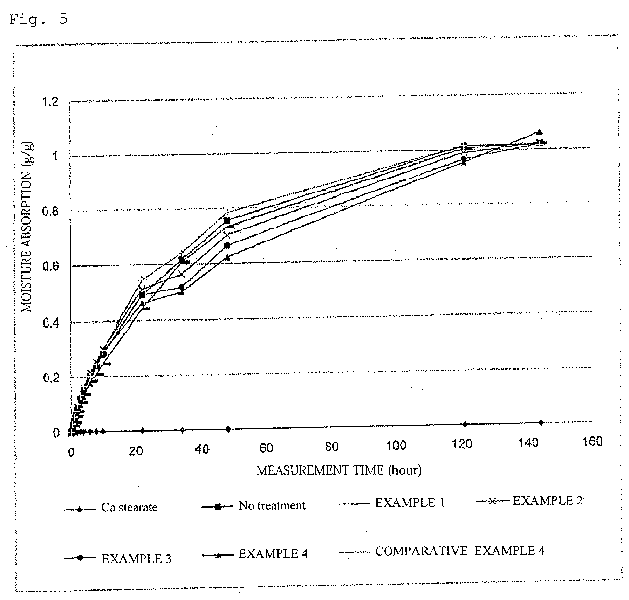

The desiccant compositions of Examples and Comparative Examples as well as the anhydrous magnesium sulfate labeled with "No treatment" and calcium stearate were determined for the moisture absorption speed based on the moisture absorption (g/g) at each measurement time. The results are shown in Table 3 and Fig. 5.

**Table 3**

| Measurement time (hour) | Ca stearate | No treatment | Ex. 1 | Ex. 2 | Ex. 3 | Ex. 4 | Comp. Ex. 4 |
|---|---|---|---|---|---|---|---|
| 0 | 0.000 | 0.000 | 0.000 | 0.000 | 0.000 | 0.000 | 0.000 |
| 0.5 | 0.000 | 0.022 | 0.022 | 0.025 | 0.012 | 0.020 | 0.029 |
| 1 | 0.000 | 0.036 | 0.035 | 0.041 | 0.038 | 0.032 | 0.054 |
| 1.5 | 0.000 | 0.059 | 0.057 | 0.067 | 0.059 | 0.050 | 0.077 |
| 2 | 0.000 | 0.080 | 0.076 | 0.089 | 0.087 | 0.068 | 0.100 |
| 3 | 0.000 | 0.119 | 0.108 | 0.125 | 0.116 | 0.100 | 0.134 |
| 4 | 0.000 | 0.151 | 0.136 | 0.159 | 0.145 | 0.129 | 0.168 |
| 6 | 0.000 | 0.203 | 0.184 | 0.216 | 0.200 | 0.178 | 0.202 |
| 8 | 0.000 | 0.239 | 0.209 | 0.254 | 0.241 | 0.251 | 0.248 |
| 10 | 0.000 | 0.286 | 0.248 | 0.299 | 0.281 | 0.291 | 0.297 |
| 22 | 0.000 | 0.490 | 0.441 | 0.512 | 0.491 | 0.460 | 0.544 |
| 34 | 0.000 | 0.615 | 0.606 | 0.563 | 0.517 | 0.500 | 0.639 |
| 48 | 0.000 | 0.755 | 0.732 | 0.702 | 0.664 | 0.622 | 0.784 |
| 121 | 0.000 | 1.015 | 1.006 | 0.990 | 0.966 | 0.955 | 1.015 |
| 144 | 0.000 | 1.020 | 1.020 | 1.023 | 1.020 | 1.063 | 1.015 |

As is apparent from these results, the samples of "No treatment" and Comparative Examples have a higher moisture absorption speed. In contrast, the samples of Examples containing anhydrous magnesium sulfate had the moisture absorption speed which had, according to progression of moisture absorption, an almost flat slope at the transition point (around 0.49 g/g of the moisture absorption) from anhydrous magnesium sulfate to magnesium sulfate trihydrate. Then, magnesium sulfate trihydrate changes to magnesium sulfate heptahydrate at the point of the saturation of moisture absorption.

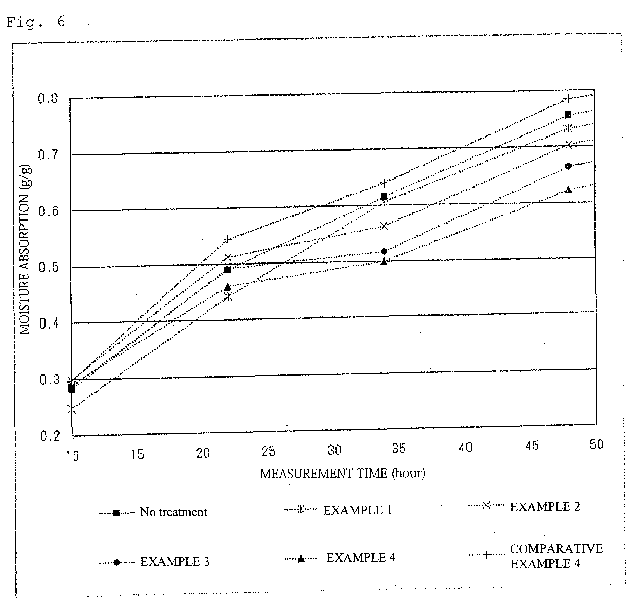

Fig. 6 shows the magnified view of the period where the above phenomena are observed. The above phenomena were observed particularly for Examples 2, 3 and 4, and the starting point and the end point for the almost flat slope of the moisture absorption speed were similar in all Examples. Thus it is preferable, in order to ensure the above phenomena, that the amount of the coating material is 3 parts by weight or more; however the increased amount of the coating material means reduction in the amount of magnesium sulfate in the desiccant, resulting in reduction in the moisture absorption by the desiccant. Considering the industrial utility, the amount of the coating material may be preferably 15 parts by weight or less.

Accordingly the desiccant produced by the method of the present invention has the moisture absorption speed which is partly decreased and thus can delay the saturation. As a result it is apparent that the desiccant produced by the method of the present invention is advantageous in the storage stability and the like.

### Example 5

The grinding process was performed in the same manner as Example 1 except that 97.0 wt% of anhydrous magnesium sulfate and 3.0 wt% of stearic acid accounted for the total of 100 wt%. The obtained ground material was measured for the particle diameters, i. e. average particle diameter (D50), D10, D90 and maximum particle diameter (Dtop) as well as for the contact angle and the saturation of moisture absorption. The results are shown in Table 4. The sample obtained in Example 5 showed the contact angle of 72.1°, confirming a preferable hydrophobicity thereof.

### Example 6

The grinding process was performed in the same manner as Example 1 except that 94.0 wt% of anhydrous magnesium sulfate and 6.0 wt% of stearic acid accounted for the total of 100 wt%. The obtained ground material was measured for the particle diameters, i. e. average particle diameter (D50), D10, D90 and maximum particle diameter (Dtop) as well as for the contact angle and the saturation of moisture absorption. The results are shown in Table 4. The sample obtained in Example 6 showed the contact angle of 128.6°, confirming a high hydrophobicity thereof.

### Example 7

The grinding process was performed in the same manner as Example 1 except that 90.0 wt% of anhydrous magnesium sulfate and 10.0 wt% of stearic acid accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 4. The sample obtained in Example 7 showed the contact angle of 127.4°, confirming a high hydrophobicity thereof.

**Table 4**

| | | Example 5 | Example 6 | Example 7 |
|---|---|---|---|---|
| Anhydrous Mg sulfate | | 97.0 | 94.0 | 90.0 |
| Stearic acid | | 3.0 | 6.0 | 10.0 |
| Particle diameter (µm) | D10 | 2.26 | 2.11 | 2.21 |
| | D50 | 3.09 | 2.93 | 3.07 |
| | D90 | 4.25 | 4.07 | 4.28 |
| | Dtop | 6.26 | 6.54 | 6.54 |
| Contact angle (°) | | 72.1 | 128.6 | 127.4 |
| Equilibrium adsorption (g/g) | | 1.03 | 1.03 | 1.03 |

### Example 8

The grinding process was performed in the same manner as Example 1 except that 97.0 wt% of anhydrous magnesium sulfate and 3.0 wt% of magnesium stearate accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 5. The sample obtained in Example 8 showed the contact angle of 141.3°, confirming a high hydrophobicity thereof.

### Example 9

The grinding process was performed in the same manner as Example 1 except that 94.0 wt% of anhydrous magnesium sulfate and 6.0 wt% of magnesium stearate accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 5. The sample obtained in Example 9 showed the contact angle of 147.3°, confirming a high hydrophobicity thereof.

### Example 10

The grinding process was performed in the same manner as Example 1 except that 90.0 wt% of anhydrous magnesium sulfate and 10.0 wt% of magnesium stearate accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 5. The sample obtained in Example 10 showed the contact angle of 151.6°, confirming a high hydrophobicity thereof.

**Table 5**

| | | Example 8 | Example 9 | Example 10 |
|---|---|---|---|---|
| Anhydrous Mg sulfate | | 97.0 | 94.0 | 90.0 |
| Mg stearate | | 3.0 | 6.0 | 10.0 |
| Particle diameter (µm) | D10 | 2.84 | 1.73 | 1.71 |
| | D50 | 4.96 | 2.67 | 2.71 |
| | D90 | 7.70 | 4.03 | 4.18 |
| | Dtop | 15.0 | 6.54 | 7.78 |
| Contact angle (°) | | 141.3 | 147.3 | 151.6 |
| Equilibrium adsorption (g/g) | | 1.02 | 1.02 | 1.01 |

### Example 11

The grinding process was performed in the same manner as Example 1 except that 97.0 wt% of anhydrous magnesium sulfate and 3.0 wt% of palmitic acid accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 6. The sample obtained in Example 11 showed the contact angle of 124.7°, confirming a high hydrophobicity thereof.

### Example 12

The grinding process was performed in the same manner as Example 1 except that 94.0 wt% of anhydrous magnesium sulfate and 6.0 wt% of palmitic acid accounted for the total of 100 wt%. The obtained ground material was measured for the particle diameters, i.e. average particle diameter (D50), D10, D90 and maximum particle diameter (Dtop) as well as for the contact angle and the saturation of moisture absorption. The results are shown in Table 6. The sample obtained in Example 12 showed the contact angle of 109.2°, confirming a high hydrophobicity thereof.

### Example 13

The grinding process was performed in the same manner as Example 1 except that 90.0 wt% of anhydrous magnesium sulfate and 10.0 wt% of palmitic acid accounted for the total of 100 wt%. The obtained ground material was measured for the particle diameters, i. e. average particle diameter (D50), D10, D90 and maximum particle diameter (Dtop) as well as for the contact angle and the saturation of moisture absorption. The results are shown in Table 6. The sample obtained in Example 13 showed the contact angle of 86.4°, confirming a preferable hydrophobicity thereof.

**Table 6**

| | | Example 11 | Example 12 | Example 13 |
|---|---|---|---|---|
| Anhydrous Mg sulfate | | 97.0 | 94.0 | 90.0 |
| Palmitic acid | | 3.0 | 6.0 | 10.0 |
| Particle diameter (µm) | D10 | 1.74 | 1.63 | 1. 84 |
| | D50 | 2.70 | 2.43 | 2.56 |
| | D90 | 4.03 | 3.44 | 3.53 |
| | Dtop | 6.54 | 5.50 | 5.50 |
| Contact angle (°) | | 124.7 | 109.2 | 86.4 |
| Equilibrium adsorption (g/g) | | 1. 02 | 1.02 | 1.03 |

## Claims

1. A method for producing a magnesium sulfate-based desiccant comprising the step of grinding a mixed material containing 1) magnesium sulfate represented by the chemical formula MgSO₄·nH₂O (0 ≤ n ≤ 3) and 2) a coating material that contains at least one of saturated monocarboxylic acids having 5 to 20 carbon atoms and salts thereof at or above a temperature at which the coating material exhibits plasticity, at or above the melting point of the coating material.

2. The method according to claim 1, wherein the coating material contains at least one of stearic acid and calcium stearate.

## Patentansprüche

1. Verfahren zur Herstellung eines Magnesiumsulfat-basierten Trocknungsmittels, umfassend den Schritt des Mahlens eines gemischten Materials, enthaltend 1) Magnesiumsulfat, dargestellt durch die chemische Formel M₉SO₄·nH₂O (0 ≤ n ≤ 3) und 2) ein Beschichtungsmaterial, das mindestens eines aus gesättigten Monocarbonsäuren mit 5 bis 20 Kohlenstoffatomen und Salzen davon enthält, bei oder oberhalb einer Temperatur, bei der das Beschichtungsmaterial Formbarkeit zeigt, bei oder oberhalb des Schmelzpunkts des Beschichtungsmaterials.

2. Verfahren nach Anspruch 1, wobei das Beschichtungsmaterial mindestens eines aus Stearinsäure und Calciumstearat enthält.

## Revendications

1. Méthode de production d'un desséchant à base de sulfate de magnésium comprenant l'étape de broyage d'un matériau mélangé contenant 1) du sulfate de magnésium représenté par la formule chimique MgSO₄·nH₂O (0 ≤ n ≤ 3) et 2) et un matériau de revêtement qui contient au moins l'un parmi les acides monocarboxyliques saturés ayant 5 à 20 atomes de carbone et leurs sels à une température supérieure ou égale à laquelle le matériau de revêtement présente de la plasticité, et à une température supérieure ou égale au point de fusion du matériau de revêtement.

2. Méthode selon la revendication 1, où le matériau de revêtement contient au moins l'un parmi l'acide stéarique et le stéarate de calcium.
